# EUROPEAN PATENT SPECIFICATION

(11) **EP 0 534 716 B1**
(45) Date of publication and mention of the grant of the patent: **03.02.1999**
(21) Application number: 92308626.8
(22) Date of filing: 22.09.1992
(51) Int. Cl.: H04Q 7/20

(54) **Cellular mobile telephone exchange system**
Vermittlungsanlage für mobil-zellular Telefonsystem
Autocommutateur pour système de téléphonie mobile cellulaire

(30) Priority: 26.09.1991 JP 273620/91
(43) Date of publication of application: 31.03.1993
(73) Proprietor: NEC CORPORATION, Tokyo (JP)
(72) Inventor: Yahagi, Masahiko, Minato-ku, Tokyo (JP)
(74) Representative: Orchard, Oliver John

(56) References cited:
- US-A- 3 539 924
- US-A- 3 906 166
- PATENT ABSTRACTS OF JAPAN vol. 13, no. 268 (E-775)20 June 1989 & JP-A-10 58 134
- 36TH IEEE VEHICULAR TECHNOLOGY CONFERENCE 22 May 1986, DALLAS,USA pages 304 -
- 310 CULP 'Cellular intersystem handoff: Creating transparent boundaries'

## Description

The present invention relates to a cellular mobile telephone exchange system comprising one or more mobile stations, a plurality of groups of radio base-station transmitters-receivers, base-station controllers assigned to each group of radio base-station transmitters-receivers for controlling each radio base-station transmitter-receiver in said group, and a mobile telephone switching unit for controlling a plurality of base-station controllers.

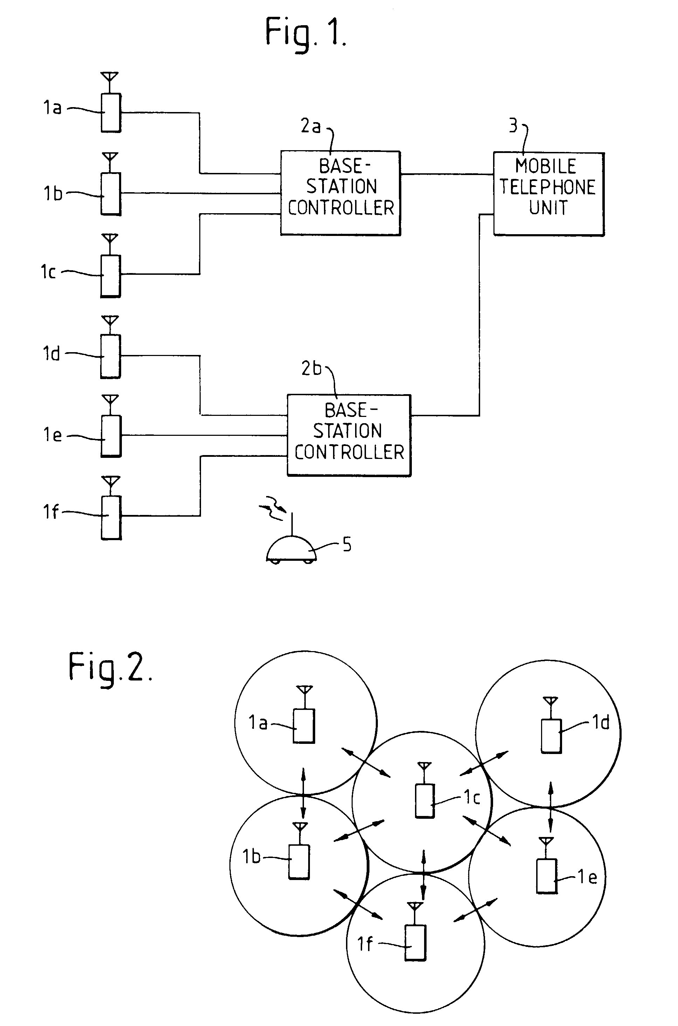

A previously proposed arrangement will now be described with reference to Figs. 1 and 2 of the accompanying drawings in which:-
Fig. 1 is a block schematic circuit diagram showing a cellular mobile telephone exchange system, and
Fig. 2 is a schematic diagram showing the coverage areas of each radio base-station transmitter-receiver 1a through 1f.

Each transmitter-receiver 1a through 1f has a transmitting-receiving function for a plurality of channels and covers one area as shown in Fig. 2. Base-station controller 2a comprises communication channels communicating with a mobile telephone exchange unit 3 and radio base-station transmitters-receivers 1a, 1b, 1c, a network switch which connects these channels each other, and a CPU for controlling the network switch. Similarly, base-station controller 2b comprises communication channels communicating with mobile telephone exchange unit 3 and radio base-station transmitters-receivers 1d, 1e, 1f, a network switch which connects these channels each other, and a CPU for controlling the network switch.

When mobile station 5 moves out of the range of radio base-station transmitter-receiver 1b and into the coverage area of radio base-station transmitter-receiver 1c, base-station controller 2a switches the communication channel from the radio base-station transmitter-receiver 1b to 1c by using its network switch and CPU to continue the call with mobile station 5. Next, when mobile station 5 moves out of the coverage area of radio base-station transmitter-receiver 1c and into the coverage area of radio base-station transmitter-receiver 1d, base-station controller 2a becomes unable to keep up with the movement of the mobile station by a switching operation within the controller, and consequently, base-station controllers 2a, 2b and mobile telephone exchange unit 3 exchange information to connect the appropriate call channel by using the network switch of the mobile telephone exchange unit 3, thereby continuing the call with mobile station 5.

The conventional cellular mobile telephone exchange system described above has the drawback that when a mobile station frequently moves between the coverage area of a radio base-station controlled by a base-station controller and the coverage area of another radio base-station controlled by another base-station controller according to a schedule set for more than one time zone, or when traffic increases between the coverage areas of more than one-base-station controller (movement characteristics of a mobile station), the load on the mobile telephone exchange unit will increase to an excessive degree.

In the specification of United States patent number 3,906,166, which was published on September 16 1975, there was proposed a portable duplex radio telephone system having a base station, a plurality of portable or mobile units and satellite receivers about the base station for receiving transmissions from the portable units. When communication was initiated, the portable transmitter and receiver were automatically returned to one of the communication channels as determined by the strongest signalling frequency received by the portable receiver and by channel availability.

In Patent Abstracts of Japan, Vol. 013268, Group E775, dated June 20 1989, there was described a method and system for mobile body communication, which was proposed in the specification of Japanese patent publication number 1058134, which was published on March 6 1989. The arrangement proposed in that specification employed a plurality of radio base-station transmitters/receivers connected fixedly with one radio system controller 20 and included an S/N monitor in the radio system controller to detect any deterioration of communication quality, whereby a request could be given to all of the surrounding base stations to monitor the quality of the signal, so that after a comparison of plural sets of information, the equipment could be commanded to implement the transmission/reception via another channel.

Features of a cellular mobile telephone exchange system to be described below in illustration of the present invention are that the load on a mobile telephone exchange unit is reduced and the time period required for switching call channels is shortened.

A particular cellular mobile telephone exchange system to be described below, by way of example, in illustration of the invention includes one or more mobile stations,
a plurality of radio base-station transmitters-receivers,
a plurality of base-station controllers for controlling said radio base-station transmitters-receivers,
a switch which allows optional setting of connecting conditions between a plurality of said radio base-station transmitters-receivers and a plurality of said base-station controllers, and
a mobile telephone exchange unit for controlling a plurality of said base-station controllers.

In conventional systems, in which the connection between a base-station controller and a radio base-station transmitter-receiver is nearly always fixed, the call channel exchange control is in many cases performed by a plurality of base-station controllers and a mobile telephone switching unit; however, by changing the connecting conditions between the base-station controllers and the radio base-stations by using a switch as in the present invention, it becomes possible to perform call channel switching control within the base-station controller. Consequently, call handling loads on a mobile telephone exchange unit can be reduced and the time necessary for exchanging a call channel is shortened.

The following description and drawings disclose, by means of an example, the invention which is characterised in the appended claims, whose terms determine the extent of the protection conferred hereby:-

In the following drawings:

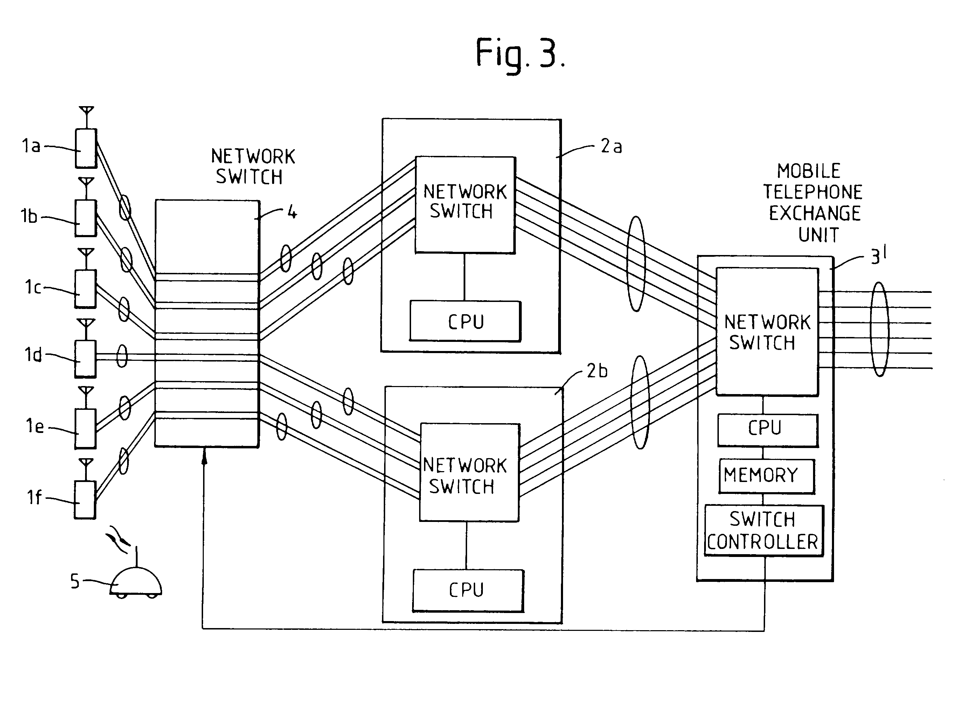

Fig. 3 is a block diagram showing an embodiment of the cellular mobile telephone exchange system, and

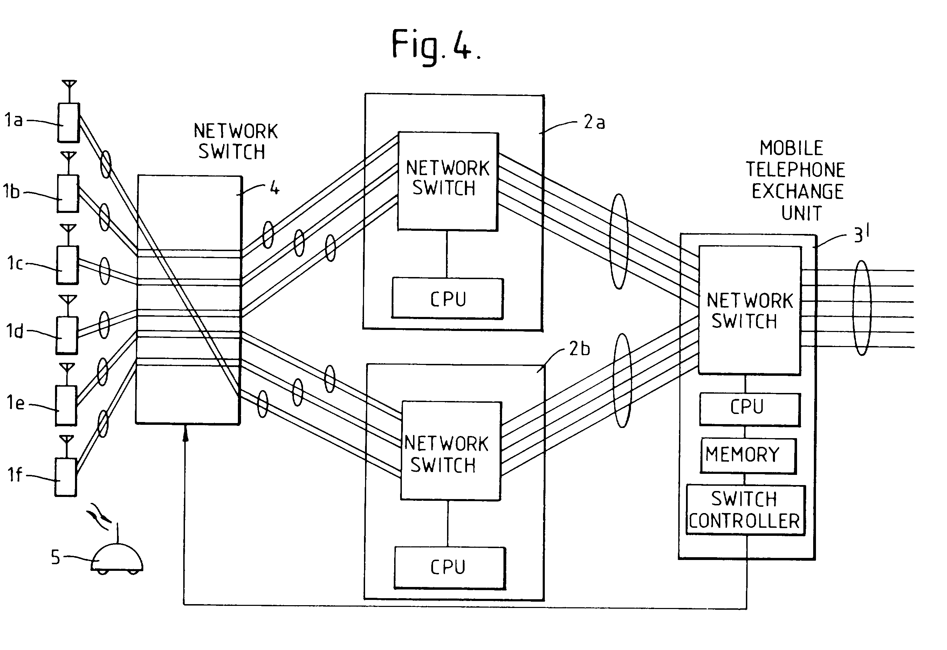

Fig. 4 is a block diagram showing a state of inner connection of network switch 4 different from that shown in Fig. 3.

Referring to Fig. 3, the cellular mobile telephone switching system shown consists of
(1) radio base-station transmitter-receivers 1a through 1f,
(2) base-station controller 2a for controlling radio base-station transmitters-receivers 1a through 1f,
(3) base-station controller 2b for controlling radio base-station transmitters-receivers 1a through 1f,
(4) network switch 4 for connecting radio base-stations 1a through 1f and base-station controllers 2a, 2b,
(5) mobile telephone exchange unit 3' for controlling base-station controllers 2a, 2b, and
(6) mobile station 5.
Network switch 4 which has the same number of input lines and output lines, is controlled by mobile telephone exchange unit 3' so that it can connect radio base-station transmitters-receivers 1a through 1c to radio base-station controller 2a or 2b and connect radio base-station transmitters-receivers 1d through 1f to radio base-station controller 2b or 2a.

The operation of the embodiment will now be described hereinafter. Let it be assumed that base-station controller 2a is connected to radio base-station transmitters-receivers 1a, 1b and 1c, and base-station controller 2b is connected to radio base-station transmitters-receivers 1d, 1e and 1f, both by means of network switch 4. At this time, base-station controller 2a can connect the call channels of radio base-station transmitters-receivers 1a, 1b and 1c to mobile telephone exchange unit 3'. Similarly, base-station controller 2b can connect the call channels of radio base-station transmitters-receivers 1d, 1e and 1f to mobile telephone exchange unit 3'.

When mobile station 5 moves from the coverage area of radio base-station transmitter-receiver 1b to the coverage area of radio base-station transmitter-receiver 1c, a call to mobile station 5 can be continued by switching the network switch of base-station controller 2a.

Mobile telephone exchange unit 3' observes the amount of movement by mobile station 5 between the coverage areas for different time zones by using its traffic condition observation function. In order to minimize the load on mobile telephone exchange unit 3', mobile telephone exchange unit 3' then switches the connecting condition of network switch 4 to that shown in Fig. 4, using the observed data. In Fig. 4, since both radio base-station transmitter-receiver 1c and radio base-station transmitter-receiver 1d can be connected by base-station controller 2a, a call to mobile station 5 can be continued by switching only the network switch of base-station controller 2a. Therefore, it is possible to continue the call with mobile station 5 without using the network switch of mobile telephone exchange unit 3', thereby reducing the load on the mobile telephone exchange unit 3'.

As stated above, in this embodiment, a call to mobile station 5 can be continued not only by switching the network switch of base-station controller 2a but also by switching the network switch of base-station controller 2b and the network switch of mobile telephone exchange unit 3'.

Further, a connection bus having a switching function similar to network switch 4 can be used instead of network switch 4.

Although a certain preferred embodiment of the present invention has been shown and described in detail, it should be understood that various changes and modifications may be made therein without departing from the scope of the appended claims.

## Claims

1. A cellular mobile telephone exchange system, including
one or more mobile stations (5),
a plurality of radio base-station transmitters-receivers 1a-1f,
a plurality of base-station controllers (2a) (2b) for controlling the radio base-station transmitters-receivers (1a-1f), and
a mobile telephone exchange unit (3') for controlling a plurality of the base-station controllers, characterised in that there is provided a switch (4) which allows the optional setting of connections between a plurality of the radio base-station transmitters-receivers (1a-1f) and a plurality of the base-station controllers (2a) (2b), wherein the switch (4) is controlled by the mobile telephone exchange unit (3), and
wherein the mobile telephone exchange unit (3) is arranged to observe the amount of movement by a mobile station between coverage areas of the radio base-station transmitters-receivers and, on the basis of the observed data, is arranged to set connecting conditions of the switch (4) so as to minimize the load on the mobile telephone exchange unit (3).

## Patentansprüche

1. Zellenmobiltelefon-Vermittlungssystem, mit
einer oder mehreren Mobilstationen (5),
mehreren Funkbasisstations-Sender-/Empfängern(1a-1f). mehreren Basisstations-Steuereinrichtungen (2a) (2b) zur Steuerung der Funkbasisstations-Sender-/Empfänger (1a-1f), und
einer Mobiltelefon-Vermittlungseinheit (3') zur Steuerung mehrerer der Basisstations-Steuereinrichtungen, dadurch gekennzeichnet, daß eine Vermittlungsstelle (4) vorgesehen ist, die die wahlfreie Einstellung von Verbindungen zwischen mehreren der Funkbasisstations-Sender-/Empfänger (1a-1f) und mehreren der Basisstations-Steuereinrichtungen (2a) (2b) gestattet, wobei die Vermittlungsstelle (4) durch die Mobiltelefon-Vermittlungseinheit (3) gesteuert wird, und wobei die Mobiltelefon-Vermittlungseinheit (3) eingerichtet ist, um das Ausmaß der Bewegung durch eine Mobilstation zwischen Erfassungsbereichen der Funkbasisstations-Sender-/ Empfänger zu überwachen und, auf der Grundlage der beobachteten Daten, eingerichtet ist, um Verbindungsbedingungen der Vermittlungsstelle (4) so einzustellen, daß die Belastung der Mobiltelefon-Vermittlungseinheit (3) minimiert wird.

## Revendications

1. Autocommutateur pour système de téléphonie mobile cellulaire, comprenant
une ou plusieurs stations mobiles (5),
une pluralité d'émetteurs-récepteurs de station de base radio (1a-1f),
une pluralité de contrôleurs de station de base (2a)(2b) pour contrôler les émetteurs-récepteurs de station de base radio (1a-1f), et
une unité d'autocommutateur pour système de téléphonie mobile (3') pour contrôler une pluralité des contrôleurs de station de base, caractérisé en ce qu'il est prévu un commutateur (4) qui permet le réglage facultatif de connexions entre une pluralité d'émetteurs-récepteurs de station de base radio (1a-1f) et une pluralité des contrôleurs de station de base (2a)(2b), dans lequel le commutateur (4) est commandé par l'unité d'autocommutateur pour système de téléphonie mobile (3), et
dans lequel l'unité d'autocommutateur pour système de téléphonie mobile (3) est agencée pour observer la quantité de mouvement par une station mobile entre les zones de couverture des émetteurs-récepteurs de station de base radio et, en se basant sur les données observées, est agencée pour déterminer les conditions de connexion du commutateur (4) afin de minimiser la charge sur l'unité d'autocommutateur pour système de téléphonie mobile (3).
